# EUROPEAN PATENT SPECIFICATION

(11) **EP 3 320 663 B1**
(45) Date of publication and mention of the grant of the patent: **06.09.2023**
(21) Application number: 16744636.8
(22) Date of filing: 15.07.2016
(51) Int. Cl.: H04L 69/18

(54) **MULTI-NETWORK MIRRORING SYSTEMS AND METHODS**
MULTINETZWERKSPIEGELUNGSSYSTEME UND VERFAHREN
SYSTÈMES ET PROCÉDÉS DE RÉFLEXION SUR RÉSEAUX MULTIPLES

(30) Priority: 16.07.2015 US 201514801579
(43) Date of publication of application: 16.05.2018
(73) Proprietor: Promethean Limited, Blackburn Lancashire BB1 5TH (GB)
(72) Inventor: VENKATARAMAN, Sriraman, Alpharetta, Georgia 30009 (US); BENFIELD, Steve, Alpharetta, Georgia 30009 (US); HENDERSON, Verlin, Atlanta, Georgia 30009 (US); EDWARDSON, Andrew, Blackburn Lancashire BB1 5TH (GB); WAREING, Paul, Blackburn Lancashire BB1 5TH (GB)
(74) Representative: Page White Farrer
(86) International application number: PCT/US2016/042632
(87) International publication number: WO 2017/011800

(56) References cited:
- US-A1- 2008 026 839
- US-A1- 2014 082 525
- US-A1- 2015 121 189

## Description

### CLAIM OF PRIORITY

This application claims priority to U.S. Patent Application No. 14/801,579, filed July 16, 2015, entitled "Multi-Network Mirroring Systems and Methods".

### BACKGROUND

Establishments typically have multiple networks - a first for allowing employees to access the company local area network and the second for allowing guests to gain access to the internet. This type of setup is similar to local area networks found in schools. For example, in many schools a first teacher local area network is available for teachers and administrators to connect to in order to access school specific applications and the internet, and a second students' local area network is available for the students to connect to student specific applications and the internet.

The use of multiple networks can make collaborating between groups of individuals very difficult. For example, when a group of individuals are engaged in a collaborative presentation, some of the individuals in the group may be connected to the first network while others in the group may be connected to the second network. Current mirroring systems allow a user to connect a mobile device such as a mobile phone or a remote computing device to a remote display when connecting to a network. These systems allow the user to mirror the content from the mobile computing device onto the remote display so that others may also view the content. These systems require the user to connect to a mirroring device such as Apple TV^{®} or Chromecast^{®} that connects to the same network to which the user's device is connected. However, when a second user attempts to connect to the mirroring device, the first user is kicked off and the second user is then able to control the content that is displayed from the second user's mobile device. Accordingly, there is currently a need for improved systems and methods for mirroring content from multiple users over multiple networks to allow various groups of users to share the same remote display.

US 2015 0121189 discloses a computer system for creating and displaying a presentation. US 2014 0082525 discloses a action orientated social collaboration system which monitors user interaction with computer software applications. US 2008 0026839 discloses a system for displaying attributes related to opposing players and game objects to a user.

### SUMMARY OF THE VARIOUS EMBODIMENTS

In general, in various embodiments, a system is adapted for displaying information from multiple remote computing devices on a display. The system comprises: (1) one or more processors; (2) a first network communication device that is configured to connect to a first local area network; (3) a second network communication device that is configured to connect to a second local area network, wherein the first network communication device and the second network communication device are simultaneously active; and (4) a first output is configured to couple to an interactive display. The system is configured for connecting to both the first location area network via the first network communication device and the second local area network via the second network communication device such that the system is simultaneously connected to both the first local area network and the second local area network, without providing a connection between the first local area network and the second local area network The system if further configured for receiving, via the first network communication device, a first set of information from a first remote computing device that is operatively connected to the first local area network. The system is still further configured for receiving, via the second network communication device, a second set of information from a second remote computing device that is operatively connected to the second local area network. The system is also configured for mirroring at least a portion of a first display for the first remote computing device based at least partially on the first set of information on the interactive display. The system is further configured for mirroring at least a portion of a second display for the second remote computing device based at least partially on the second set of information on the interactive display.

According to various embodiments, a method is adapted for mirroring information from a plurality of computing devices on a display using a plurality of local area networks. The method comprises operatively connecting, via a first communication device, one or more processors with a first local area network, such that the one or more processors are simultaneously connected to both the first local area network and the second local area network, without providing a connection between the first local area network and the second local area network. The method also comprises operatively connecting, via a second communication device, the one or more processors with a second local area network. The method comprises receiving, via the first local area network, a first set of information from a first remote computing device having a first display. The method also comprises receiving, via the second local area network, a second set of information from a second remote computing device having a second display. In various embodiments, the method comprises mirroring, via the one or more processors, at least a portion of the first display for the first remote computing device on the display at least partially based on the first set of information. The method further comprises mirroring, via the one or more processors, at least a portion of the second display for the second remote computing device on the display at least partially based on the second set of information.

In general, according to various embodiments, a system is adapted for displaying information from multiple remote computing devices on a display. The system comprises: (1) one or more processors; (2) a first network communication device that is configured to connect to a first local area network; (3) a second network communication device that is configured to operate as a wireless access point that can wirelessly connect to one or more remote computing devices; and (4) a first output configured to couple to a display. The system is configured for connecting to both the first location area network via the first network communication device and the second local area network via the second network communication device such that the system is simultaneously connected to both the first local area network and the second local area network, without providing a connection between the first local area network and the second local area network. The system is further configured for receiving, via the first network communication device, a first set of information from a first remote computing device that is operatively connected to the first local area network. The system is also configured for receiving, via the second network communication device, a second set of information from a second remote computing device. The system is further configured for mirroring on the display at least a portion of a first display for the first remote computing device based at least partially on the first set of information. The system is also configured for mirroring on the display at least a portion of a second display for the second remote computing device based at least partially on the second set of information.

### BRIEF DESCRIPTION OF THE DRAWINGS

Various embodiments of a multi-network mirroring systems and methods are described below. In the course of this description, reference will be made to the accompanying drawings, which are not necessarily drawn to scale and wherein:
Figure 1A is a block diagram of a multi-network mirroring system in accordance with an embodiment of the present system;
Figure 1B is a block diagram of a multi-network mirroring system according to an alternate embodiment;
Figure 2 is a block diagram of a computing device for use in the multi-network communication box of Figure 1;
Figure 3 is a block diagram of the multi-network communication box of Figure 1;
Figure 4 illustrates a flowchart that generally illustrates various steps executed by a multi-network mirroring module according to a particular embodiment;
Figure 5 illustrates a flowchart that generally illustrates various steps executed by an access point mirroring module according to a particular embodiment; and
Figure 6 illustrates an exemplary multi-network mirroring system according to various embodiments.

### DETAILED DESCRIPTION OF SOME EMBODIMENTS

Various embodiments will now be described more fully hereinafter with reference to the accompanying drawings. It should be understood that the invention may be embodied in many different forms and should not be construed as limited to the embodiments set forth herein. Rather, these embodiments are provided so that this disclosure will be thorough and complete, and will fully convey the scope of the invention to those skilled in the art. Like numbers refer to like elements throughout.

### Overview

In general, a system and method, according to various embodiments, is adapted for mirroring information from multiple remote computing devices onto a display using multiple local area networks. The system allows one or more users to display content from one or more remote computing devices simultaneously on a display. In various embodiments, the display is an interactive display that allows the user to annotate and comment through a transparent virtual layer formed over the displayed content. The system may, in various embodiments, receive mirroring content from a first remote computing device that is connected to a first network such as the user's home network. The system may also receive mirroring content from a second remote computing device that is connected to a second network such as the user's guest network. The system may then mirror the content from the first remote computing device and mirror the content from the second remote computing device onto an interactive display such as a touch-enabled whiteboard or display. This allows the users to view at least a portion of the content from both remote computing devices on a potentially larger display and allows multiple users to collaborate while connected to different networks. For example, in a classroom setting, the teacher can be connected to a teachers' local area network while the students are connected to a students' local area network. Through the use of the system, both the teacher and one or more students may mirror the information on a display for their mobile computing device onto a main interactive display that is in the classroom. Mirroring of the information for the teacher and/or one or more students may be displayed simultaneously on the interactive display. In this way, the students and teacher may collaborate while connected to different local area networks.

In various embodiments, the system includes a multi-network communication box that enables multiple users on multiple networks to mirror content onto a single display. The multi-network communication box includes one or more communication devices such as a network card, Wi-Fi device, Ethernet port, etc. The one or more communication devices are enabled to each connect to a different network (e.g., wired or wireless). The multi-network communication box also includes a graphics card for receiving graphic media to display on the interactive display. In various embodiments, the multi-network communication box includes ram memory and storage memory. In particular embodiments, the multi-network communication box also includes one or more output ports and one or more input ports for transmitting and receiving content from and to an interactive display.

Because the multi-network communication box is able to connect to multiple networks, companies are able to provide guests with access to a guest network rather than allowing guests or non-employees to connect to the company's corporate network. The multi-network communication box also allows schools to provide students access to a student network without providing them access to a teacher's network in order to collaborate with a teacher and other students while in the classroom. Thus, the system allows groups of users to connect to different networks while still collaborating on a central interactive display.

### Exemplary Technical Platforms

As will be appreciated by one skilled in the relevant field, the present systems and methods may be, for example, embodied as a computer system, a method, or a computer program product. Accordingly, various embodiments may be entirely hardware or a combination of hardware and software. Furthermore, particular embodiments may take the form of a computer program product stored on a computer-readable storage medium having computer-readable instructions (e.g., software) embodied in the storage medium. Various embodiments may also take the form of Internet-implemented computer software. Any suitable computer-readable storage medium may be utilized including, for example, hard disks, thumb drives, compact disks, DVDs, optical storage devices, and/or magnetic storage devices.

Various embodiments are described below with reference to block diagram and flowchart illustrations of methods, apparatuses, (e.g., systems), and computer program products. It should be understood that each block of the block diagrams and flowchart illustrations, and combinations of blocks in the block diagrams and flowchart illustrations, respectively, can be implemented by a computer executing computer program instructions. These computer program instructions may be loaded onto a general purpose computer, a special purpose computer, or other programmable data processing apparatus that can direct a computer or other programmable data processing apparatus to function in a particular manner such that the instructions stored in the computer-readable memory produce an article of manufacture that is configured for implementing the functions specified in the flowchart block or blocks.

The computer instructions may execute entirely on the user's computer, partly on the user's computer, as a stand-alone software package, partly on a user's computer and partly on a remote computer, or entirely on the remote computer or server. In the latter scenario, the remote computer may be connected to the user's computer through any suitable type of network, including but not limited to: (1) a local area network (LAN); (2) a wide area network (WAN); and/or (3) a cellular network. It should be understood that a particular computer's connection to the network may be made via an external computer (for example, by connecting to the Internet via a "hotspot" provided by a portable wireless device).

The computer program instructions may also be stored in a computer-readable memory that can direct a computer or other programmable data processing apparatus to function in a particular manner such that the instructions stored in the computer-readable memory produce an article of manufacture that is configured for implementing the function specified in the flowchart block or blocks. The computer program instructions may also be loaded onto a computer or other programmable data processing apparatus to cause a series of operational steps to be performed on the computer or other programmable apparatus to produce a computer-implemented process (e.g., method) such that the instructions that execute on the computer or other programmable apparatus provide steps for implementing the functions specified in the flowchart block or blocks.

### Example System Architecture

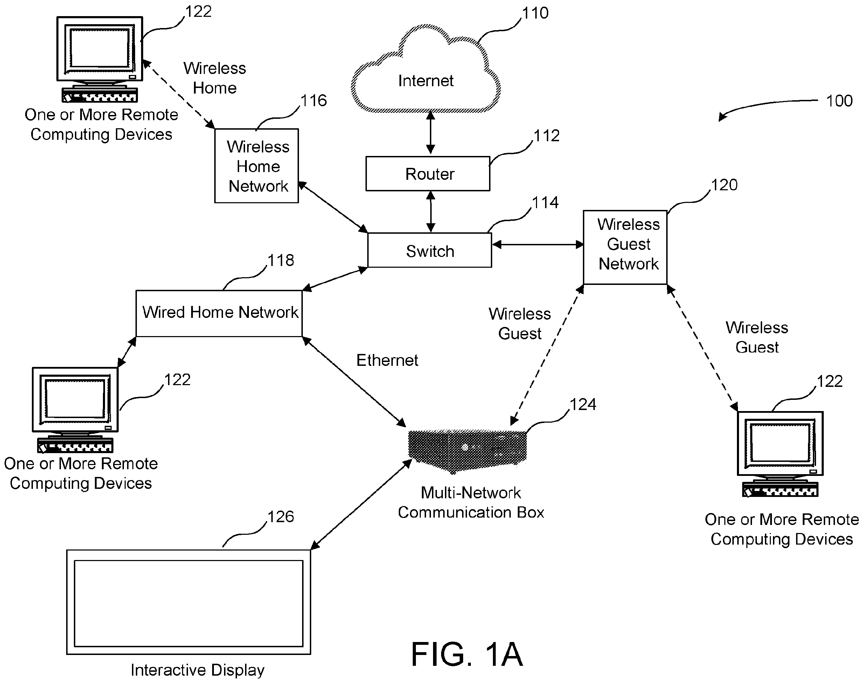

Figure 1A is a block diagram of a multi-network mirroring system 100 according to particular embodiments. As may be understood from this figure, the multi-network mirroring system **100** includes Internet **110,** a router **112,** and a switch **114.** The switch **114** may be operatively coupled to a wireless home network **116** (e.g., a corporate network, a teachers' network, etc.), a wired home network **118** (e.g., a corporate network, a teachers' network, etc.), and/or a wireless guest network **120** (e.g., a business guest network, a students' network, etc.) such that these networks may access the Internet **110.** The networks **116, 118, 120** may include any of a variety of types of wired or wireless computer networks such as the Internet (or other WAN), a private intranet, a mesh network, a public switch telephone network (PSTN), or any other type of network (e.g., a network that uses Bluetooth, beacon communication technologies, and/or near field communications to facilitate communication between computing devices). In various embodiments, one or more remote computing devices **122** may be operatively coupled to any one of the wireless home network **116**, the wired home network **118**, or the wireless guest network **120.** The communication link between the one or more remote computing devices **122** and the wired home network **118** may be, for example, implemented via an Ethernet connection. The communication link between the one or more remote computing devices **122** and the wireless home network **116** or the wireless guest network **120** may be, for example, implemented via a wireless connection (e.g., Wi-Fi, etc.).

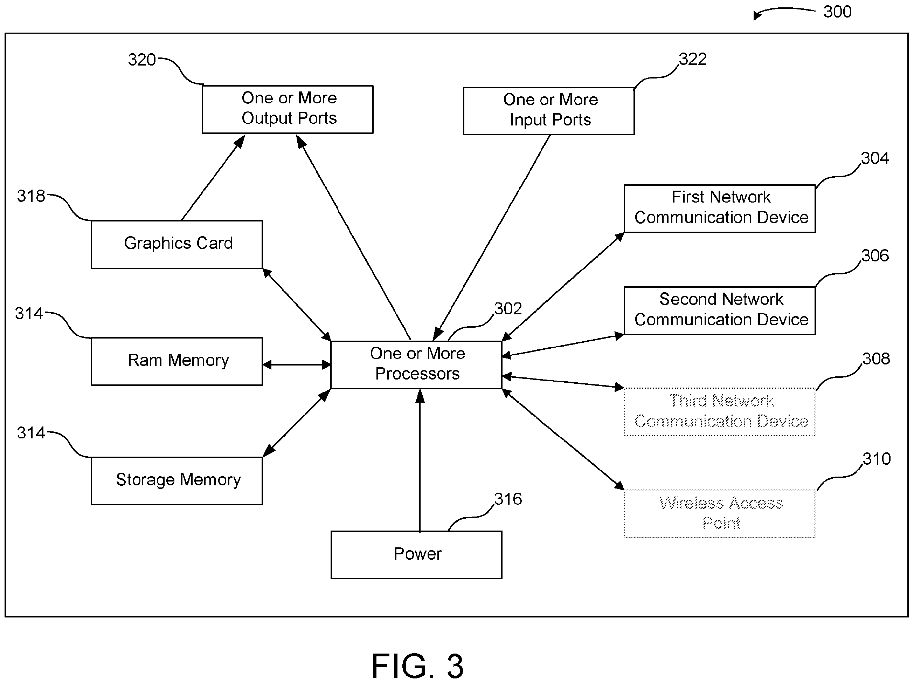

One or more of the networks **116, 118, 120** may be operatively connected to a multi-network communication box **124.** The multi-network communication box **124,** discussed further in reference to Figure 3 below, may be operatively coupled to an interactive display **126** and one or more of the wired **118** or wireless networks **116, 120.** In particular embodiments, the multi-network connection box **124** may be integrally formed with the interactive display **126.** That is, the components and software that resides in the multi-network connection box may be built directly into the interactive display 126. In various embodiments, the interactive display **126** may be an interactive whiteboard, an interactive TV, a multi-sensory input display (received one or more inputs through mouse, keyboard, touch, pointer, sound, gesturing, etc.) or any other suitable interactive display (e.g., a touch enabled whiteboard, a touch enabled display, etc.).

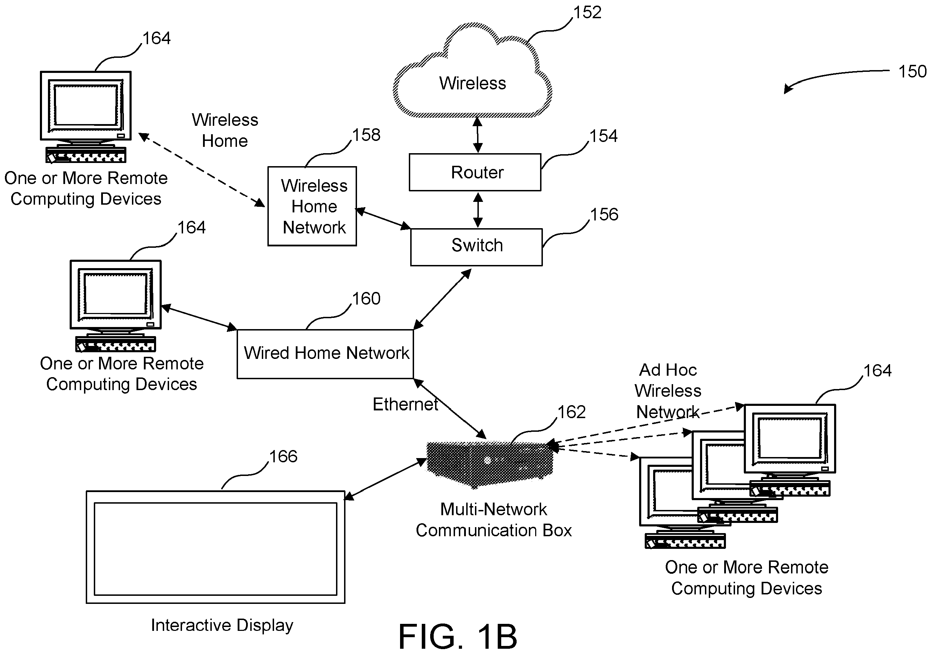

Figure 1B is a block diagram of an alternate embodiment of a multi-network access point mirroring system **150** according to particular embodiments. Similar to the multi-network mirroring system **100** shown in Figure 1A, the multi-network access point mirroring system **150** of Figure 1B includes the Internet **152**, a router **154**, and a switch **156.** The switch **156** may be operatively coupled to a wireless home network **158** and a wired home network **160** such that these networks may access the Internet **152.** The networks **158, 160** may include any of a variety of types of wired or wireless computer networks such as the Internet (or other WAN), a private intranet, a mesh network, a public switch telephone network (PSTN), or any other type of network (e.g., a network that uses Bluetooth, beacon communication technologies, and/or near field communications to facilitate communication between computing devices).

The multi-network access point mirroring system **150** also includes a multi-network communication box **162** that may function as a wireless access point to one or more remote computing devices **164.** The one or more remote computing devices **164** may be operatively coupled to any one of the wireless home network **158**, the wired home network **160**, or the multi-network communication box **162** via the wireless access point (e.g., a wireless router, a Bluetooth communication device, etc.) built into the multi-network communication box **162**, to form an Ad-hoc wireless network. The communication link between the one or more remote computing devices **164** and the wired home network **160** may be, for example, implemented via an Ethernet connection. In various embodiments, the communication link between the one or more remote computing devices **164** and the wireless home network **158** or the multi-network communication box **162** may be, for example, implemented via a wireless connection. The multi-network communication box **162** may also be operatively coupled to an interactive display **166** via a HDMI connection, a DVI connection or any other suitable connection. In various embodiments, the interactive display **166** may be an interactive whiteboard, an interactive TV, or any other suitable touch enabled display device.

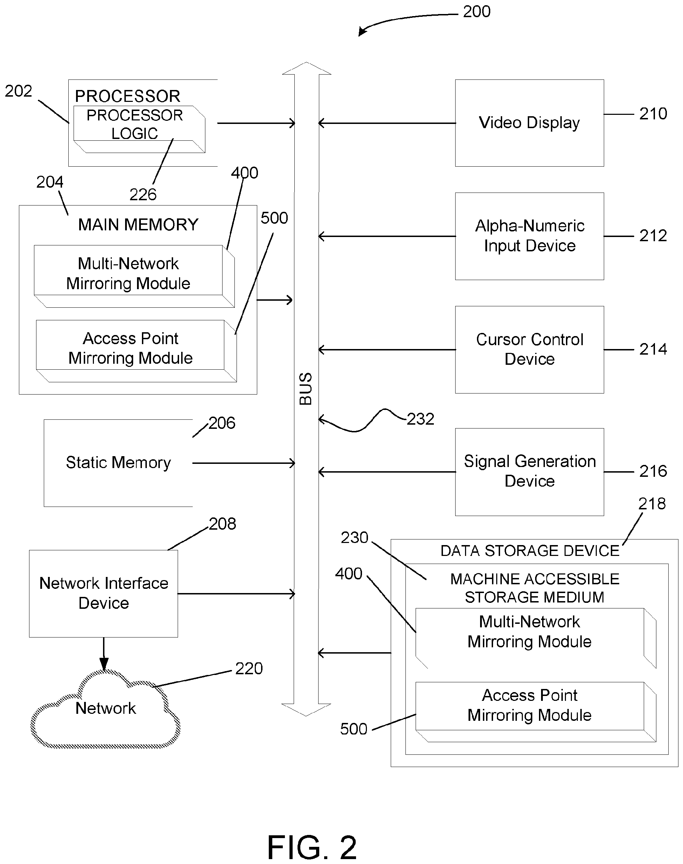

Figure 2 illustrates a diagrammatic representation of an exemplary architecture of a computer **200** for use in various embodiments of the multi-network mirroring system **100** and/or the multi-network access point mirroring system **150.** It should be understood that the computer architecture shown in Figure 2 may represent the computer architecture for any one of the multi-network communication box **124,162,** the one or more remote computing devices **122, 164,** and/or the interactive display **126, 166** shown in Figures 1 and 2. In particular embodiments, the multi-network communication box **124, 162** may be suitable for use as a computer within the context of the multi-network mirroring system **100** and/or the multi-network access point mirroring system **150**, which are configured for displaying, on a display simultaneously, information received from multiple remote computing devices connected to the multi-network communication box **124, 162** over different local area networks.

In particular embodiments, the computer **200** may be connected (e.g., networked) to other computing devices in a LAN, an intranet, an extranet, and/or the Internet as shown in Figures 1 and 2. As noted above, the computer **200** may operate in the capacity of a server or a client computing device in a client-server network environment, or as a peer computing device in a peer-to-peer (or distributed) network environment. The computer **200** may be a desktop personal computing device (PC), a tablet PC, a set-top box (STB), a Personal Digital Assistant (PDA), a smartphone, a web appliance, a network router, a switch or bridge, or any other computing device capable of executing a set of instructions (sequential or otherwise) that specify actions to be taken by that computing device. Further, while only a single computing device is illustrated, the term "computing device" shall also be interpreted to include any collection of computing devices that individually or jointly execute a set (or multiple sets) of instructions to perform any one or more of the methodologies discussed herein, or other suitable methodologies.

As shown in Figure 2, an exemplary computer **200** includes a processing device **202**, a main memory **204** (e.g., read-only memory (ROM), flash memory, dynamic random access memory (DRAM) such as synchronous DRAM (SDRAM) or Rambus DRAM (RDRAM), etc.), a static memory **206** (e.g., flash memory, static random access memory (SRAM), etc.), and a data storage device **218,** which communicate with each other via a bus **232.**

The processing device **202** represents one or more general-purpose or specific processing devices such as a microprocessor, a central processing unit (CPU), or the like. More particularly, the processing device **202** may be a complex instruction set computing (CISC) microprocessor, reduced instruction set computing (RISC) microprocessor, very long instruction word (VLIW) microprocessor, or processor implementing other instruction sets, or processors implementing a combination of instruction sets. The processing device **202** may also be one or more special-purpose processing devices such as an application specific integrated circuit (ASIC), a field programmable gate array (FPGA), a digital signal processor (DSP), network processor, or the like. The processing device **202** may be configured to execute processing logic **226** for performing various operations and steps discussed herein.

The computer **200** may further include a network interface device **208.** The computer **200** may also include a video display unit **210** (e.g., a liquid crystal display (LCD) or a cathode ray tube (CRT)), an alpha-numeric input device **212** (e.g., a keyboard), a cursor control device **214** (e.g., a mouse), a signal generation device **216** (e.g., a speaker), and a data storage device **218.**

The data storage device **218** may include a non-transitory computing device-accessible storage medium **230** (also known as a non-transitory computing device-readable storage medium, a non-transitory computing device-readable medium, or a non-transitory computer-readable medium) on which is stored one or more sets of instructions (e.g., the multi-network mirroring module **400** and the access point mirroring module **500**) embodying any one or more of the methodologies or functions described herein. The one or more sets of instructions may also reside, completely or at least partially, within the main memory **204** and/or within the processing device **202** during execution thereof by the computer **200** - the main memory **204** and the processing device **202** also constituting computing device-accessible storage media. The one or more sets of instructions may further be transmitted or received over a network **220** via a network interface device **208.**

While the computing device-accessible storage medium **230** is shown in an exemplary embodiment to be a single medium, the term "computing device-accessible storage medium" should be understood to include a single medium or multiple media (e.g., a centralized or distributed database, and/or associated caches and servers) that store the one or more sets of instructions. The term "computing device-accessible storage medium" should also be understood to include any medium that is capable of storing, encoding, or carrying a set of instructions for execution by the computing device and that causes the computing device to include any one or more of the methodologies of the present invention. The terms "computing device-accessible storage medium" and like terms should accordingly be understood to include, but not be limited to, solid-state memories, optical and magnetic media, etc.

Figure 3 illustrates a diagrammatic representation of exemplary internal components for a multi-network communication box **300.** As shown in Figure 3, the multi-network communication box **300** includes one or more processors **302.** The one or more processors **302** may represent one or more general-purpose or specific processing devices such as a microprocessor, a central processing unit (CPU), or the like. More particularly, the one or more processors **302** may be a complex instruction set computing (CISC) microprocessor, reduced instruction set computing (RISC) microprocessor, very long instruction word (VLIW) microprocessor, or processor implementing other instruction sets, or processors implementing a combination of instruction sets. The one or more processors **302** may also be one or more special-purpose processing devices such as an application specific integrated circuit (ASIC), a field programmable gate array (FPGA), a digital signal processor (DSP), network processor, or the like. The one or more processors **302** may be configured to execute processing logic for performing various operations and steps discussed herein such mas running an operating system (e.g., Windows, iOS, Linux, etc.) as well as other software applications and drivers (e.g., input drivers, interactive display drivers, etc.).

The one or more processors **302** may be operatively coupled to a first network communication device **304** and a second network communication device **306.** In various embodiments, the one or more processors **302** may also be operatively coupled to a third network communication device **308.** For example, the multi-network communication box **300** may include any suitable number of network communication devices. In particular embodiments, the network communication devices **304, 306** include any one of an Ethernet card, a wireless card, a wireless access card, etc. In various embodiments, the network communication devices **304, 306** may be any suitable communication device. In alternate embodiments, the multi-network communication box **300** may also include a wireless access point **310** (e.g., a wireless router, etc.).

The multi-network communication box **300** also includes ram memory **312**, storage memory **314**, and a power source **316**, which all may be directly or indirectly coupled to the one or more processors **302.** In various embodiments, the one or more processors **302** may be operatively connected to a graphics card **318**, which is in turn operatively connected to one or more output ports **320** (e.g., an HDMI port, a USB port, a DVI port, a VGA port, a composite video port, etc.) configured for coupling to a display such as a touch enabled display, an interactive white board or any other suitable interactive display. The multi-network communication box **300** also includes one or more input ports **322** for receiving an input device (e.g., a mouse, a keyboard, etc.). The one or more input ports **322** may include a USB port, a Bluetooth connection, etc. In various embodiments, the multi-network communication box **300** may be configured to include drivers that allow the multi-network communication box **300** to receive and respond to touch inputs acquired by the interactive display. Thus, in various embodiments, the multi-network communication box **300** functions as a computing device that is operatively coupled to the interactive display.

### Operation of Exemplary System

As noted above, the multi-network mirroring system **100**, according to various embodiments, is adapted to display information from multiple remote computing devices on a display (e.g., a touch enabled display). Various aspects of the system's functionality may be executed by certain system modules, including the multi-network mirroring module **400**, which is discussed in more detail below.

### Multi-Network Mirroring Module

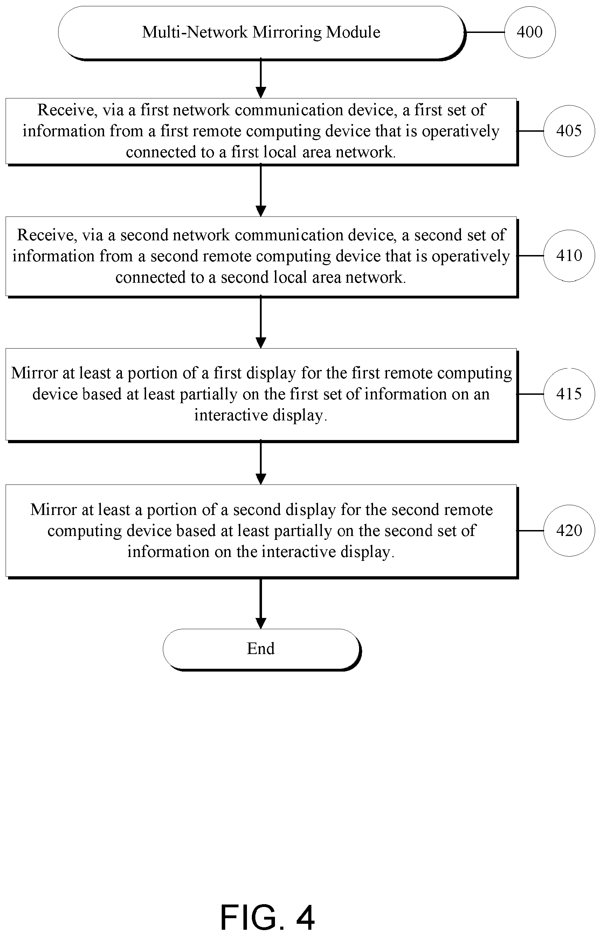

Figure 4 illustrates a flow chart of operations performed by an exemplary multi-network mirroring module **400,** which may, for example, run on the multi-network communication box **124** or any suitable computing device. In particular embodiments, the multi-network mirroring module **400** mirrors information from one or more remote computing devices onto an interactive display.

The system begins, in various embodiments, at Step **405** by receiving, via a first network communication device, a first set of information from a first remote computing device that is operatively connected to a first local area network. In various embodiments, the first network communication device may be any suitable communication device (e.g., Bluetooth device, infrared device, modem, network card using Ethernet, smartphone, Wi-Fi device, etc.). In particular embodiments, the first network communication device is a network card using Ethernet. In various embodiments, the first set of information from the first computing device includes audio and video information, and/or device information for the first computing device. In particular embodiments, the first set of information may include digital media. In various embodiments, the first computing device may be a mobile computing device.

In particular embodiments, the first local area network may be any suitable local area network. In some embodiments, the first local area network may be a home network. In various embodiments, the first local area network may be a corporate network requiring a corporate login and password to access the corporate network. In some embodiments, the first local area network may be a teacher network for teachers and faculty at a school requiring a teacher login and password to access the teacher network. In various embodiments, the first local area network is a wired network. In particular embodiments, the first local area network is a wireless network. In still other embodiments, the first local area network may be both wired and wireless.

At Step **410**, the system receives, via a second network communication device, a second set of information from a second remote computing device that is operatively connected to a second local area network. In various embodiments, the second network communication device may be any suitable communication device (e.g., Bluetooth device, infrared device, modem, network card using Ethernet, smartphone, Wi-Fi device, etc.). In particular embodiments, the second network communication device is a Wi-Fi device.

In various embodiments, the second set of information from the second computing device includes audio and video information and/or device information for the second computing device. In particular embodiments, the second set of information may include digital media. In some embodiments, the second computing device may be any suitable computing device (e.g., a desktop personal computing device (PC), a tablet PC, a smartphone, etc. In various embodiments, the second computing device may be a mobile computing device.

In particular embodiments, the second local area network may be any suitable local area network. In some embodiments, the second local area network may be a guest network. In various embodiments, the second local area network may be a corporate guest network requiring a corporate guest login and password to access the corporate guest network. In some embodiments, the second local area network may be a student network for students at a school requiring a student login and password to access the student network. In various embodiments, the second local area network is a wired network. In particular embodiments, the second local area network is a wireless network.

In various embodiments, the first and second set of information may be received substantially simultaneously (e.g., simultaneously). In other embodiments, the first set of information may be received between a time T₀ and T₁₀ while the second set of information may be received between a time T₅ and T₁₈. In other embodiments, the first set of information may be received between a time T₀ and T₁₀ and the second set of information may be received between a time T₁₂ and T₂₃. In any case, all of the above situations constitute receiving the first set of information and the second set of information substantially simultaneously.

The system, at Step 415, mirrors at least a portion of a first display for the first remote computing device based at least partially on the first set of information on an interactive display. In various embodiments, mirroring software can run on the multi-network communication box **124, 162** to allow for the mirroring of information from the first remote computing device onto the interactive display. Thus, any remote computing device running any particular operating system such as ANDROID^{®}, iOS^{®}, LINUX^{®} or WINDOWS^{®} may mirror information onto the interactive display. In various embodiments, information from the first remote computing device can be streamed to the multi-network communication box **124, 162,** which is then mirrored on the interactive display **126.**

In various embodiments, the system mirrors at least a portion of a first display for the first remote computing device on a first portion of the interactive display **126.** In particular embodiments, the system substantially mirrors the entire first display on the first portion of the interactive display **126.** In some embodiments, the system mirrors at least a portion of the first display on the entire interactive display **126.** In particular embodiments, the system mirrors the entire first display on the entire interactive display. In various embodiments, the mirrored at least a portion of the first display changes substantially simultaneously on the interactive display as the at least a portion of the first display changes on the first remote computing device. For example, when a user opens an application on the user's remote computing device, the interactive display simultaneously shows the application being opened. In particular embodiments, the system is configured to capture an image of the mirrored at least a portion of the first display. In some embodiments, the image is stored in memory for later use.

In various embodiments, the interactive display is a touch enabled display. In particular embodiments, the touch enabled display is an interactive whiteboard that is operatively coupled to one or more processors. In some embodiments, the interactive display may be used to change the display on the first remote computing device. For example, a user may move the image on the interactive display by sliding a pen along the touch enabled interactive display and, in response, the display of the user's mobile device will also move in unison with the interactive display. This allows the user to control the interactive display from either the interactive display or from the user's remote computing device.

Continuing to Step **420**, the system mirrors at least a portion of a second display for the second remote computing device based at least partially on the second set of information on the interactive display. In various embodiments, the step of mirroring at least a portion of a second display for the second remote computing device occurs substantially simultaneously (e.g., simultaneously) with the step of mirroring at least a portion of the first display for the first remote computing device.

In particular embodiments, the system mirrors at least a portion of the second display for the second remote computing device on a second portion of the interactive display. In various embodiments, the system substantially mirrors the entire second display on the second portion of the interactive display. In some embodiments, the system mirrors at least a portion of the second display on the entire interactive display. In particular embodiments, the system mirrors the entire second display on the entire interactive display. In various embodiments, the mirrored at least a portion of the second display changes substantially simultaneously on the interactive display as the at least a portion of the second display changes on the second remote computing device. For example, when a user opens an application on the user's mobile device, the interactive display simultaneously shows the application being opened. In particular embodiments, the system is configured to capture an image of the mirrored at least a portion of the second display. In some embodiments, the image is stored in memory for later use.

In various embodiments, the system is further configured for forming a transparent virtual annotation layer that is positioned over at least one of the mirrored at a least a portion of the first display and the mirrored at least a portion of the second display. In particular embodiments, the system receives one or more signals via the one or more processors from the interactive display that are generated when a user touches the interactive display. In some embodiments, the system generates annotations on the transparent virtual annotation layer at least partially in response to receiving the signals. In various embodiments, the system displays the annotations as an overlay on the transparent virtual annotation layer.

In particular embodiments, a third local area network may be operatively connected to the one or more processors via a third communication device. In various embodiments, similar to the first local area network and the second local area network, the system receives via the third local area network a third set of information from a third remote computing device having a third display. In some embodiments, the system may mirror, via the one or more processors, at least a portion of the third display for the third remote computing device on the interactive display at least partially based on the third set of information. It should be understood that the at least a portion of the first display for the first remote computing device, the at least a portion of the second display for the second remote computing device and the at least a portion of the third display for the third remote computing device may all be substantially simultaneously displayed on the interactive display.

### Alternate Embodiment

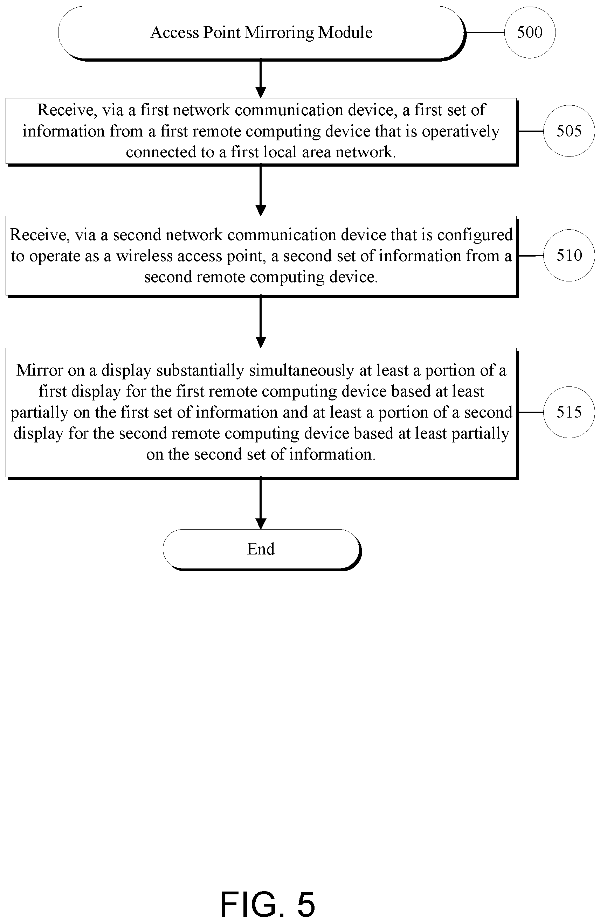

Figure 5 depicts an alternative embodiment of the multi-network mirroring module **400** of Figure 4. Thus, for purposes of ease of understanding and clarity, only certain parts will be discussed to highlight the differences between the access point mirroring module **500** and the multi-network mirroring module **400** shown in Figure 4.

As noted above, in an alternate embodiment, the multi-network access point mirroring system **150**, according to various embodiments, is adapted to display information from multiple remote computing devices on a display using the multi-network communication box as an access point. Various aspects of the system's functionality may be executed by certain system modules, including the access point mirroring module **500.** The access point mirroring module **500** is discussed in greater detail below.

Similar to Step **405** discussed above in reference to Figure 4, the access point mirroring module **500** of Figure 5 begins at Step **505** by receiving, via a first network communication device, a first set of information from a first remote computing device that is operatively connected to a first local area network. In various embodiments, the first local area network may be a wireless local area network or a wired local area network. In particular embodiments, the first network communication device may include any suitable communication device (e.g., Bluetooth device, infrared device, modem, network card using Ethernet, smartphone, Wi-Fi device, etc.).

At Step **510**, the system receives, via a second network communication device, a second set of information from a second remote computing device. In various embodiments, the second network communication device is configured to operate as a wireless access point (e.g., a router that sets up an Ad-hoc local area network). In particular embodiments, in operating as a wireless access point, the second network communication device may allow the second remote computing device to connect to a different network than the first local area network to which the first remote computing device is connected. For example, the first local area network and the wireless access point may be different local area networks. In various embodiments, the wireless access point and the first local area network may be the same network allowing different login credentials from different users. For example, the first local area network and the wireless access point may be both part of a corporate network where the first local area network allows users with corporate account information to log in and the wireless access point allows users with guest account information to log in. In particular embodiments, the system may include a third network communication device that is configured to connect to a second local area network. In various embodiments, the system may receive, via the third network communication device, a third set of information from a third remote computing device that is operatively connected to the second local area network. In some embodiments, the first local area network is a home network and the third local area network is a guest network.

Continuing to Step **515**, the system mirrors on an interactive display substantially simultaneously at least a portion of a first display for the first remote computing device based at least partially on the first set of information and at least a portion of a second display for the second remote computing device based at least partially on the second set of information. In various embodiments, the system may mirror on the display at least a portion of a third display for the third remote computing device based at least partially on the third set of information substantially simultaneously with the at least a portion of the first and second displays.

### Exemplary User Experience

### Corporate Application of the Multi-Network Mirroring System

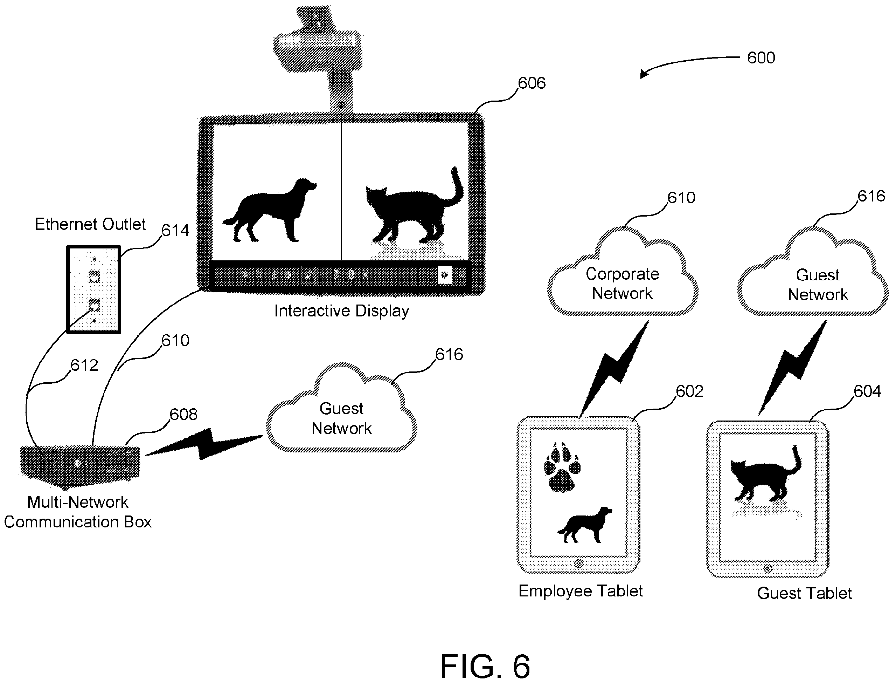

Figure 6 depicts an exemplary multi-network mirroring system **600** according to various embodiments. The multi-network mirroring system **600** allows two users to display content from the users' remote computing devices **602, 604** onto an interactive display **606.** In a particular example of a user using the multi-network mirroring system **600**, a user may connect the multi-network communication box **608** to the interactive display **606** using an HDMI cable **610**, for example, or any other suitable connection. The user may plug in the AC adapter (not shown) of the multi-network communication box **608** into a plug. The user may also connect the multi-network communication box **608** to a wired corporate network **610** by plugging an Ethernet cable **612** into the multi-network communication box **608** and connecting the other end of the Ethernet cable **612** to an Ethernet outlet **614.** The user may further connect the multi-network communication box **602** to a wireless guest network **616** by using the interactive display **606** to enter credentialing information for the wireless guest network **616.**

After all peripherals have been connected, the user may turn on the multi-network communication box **608** and use the interactive display **606** to set up the multi-network communication box **608.** The multi-network communication box **608** may provide instructions on the interactive display **606** such as providing a link a user may enter on a remote computing device **602, 604** for mirroring to the interactive display **606.** The instructions may also indicate that the user can connect to the interactive display **606** from a device by selecting a mirroring icon on the remote computing device **602, 604.** The instructions may also include that the multi-network communication box **608** and the remote computing device **602, 604** should be connected to either the corporate network **610** or the guest network **616.**

After the multi-network communication box **608** has been set up to one or more networks such as the wired corporate network **610** and the wireless guest network **616,** one or more users connected to either of these networks **610, 616** may mirror content onto the interactive display **606** through the multi-network communication box **608.** This may be beneficial for companies that do not want to provide guests with access to the company's home network but still need for the guest to be able to access a network to connect to the interactive display.

For example, a company may invite guest to interact with each other using the interactive display **606.** Because the company does not want to give full access to the company's corporate network, the company may provide their guests with access to the wireless guest network **616.** After a particular guest has logged into the wireless guest network **616** and the multi-network communication box **608** has been connected to the wireless guest network **616**, the guest may begin mirroring content from their respective mobile devices **604** onto the interactive display **606** using the multi-network communication box **608.** In addition, because the interactive display **606** is touch enabled, the guest and other users may now control the display **606** from their remote computing devices **602, 604** or from the display **606** itself. This permits seamless mirroring and easier presentation of digital content for a larger audience. In addition, an employee using the employee tablet **602** may wish to only mirror a portion of the content on the employee tablet **602.** In this case, the employee may select to mirror the bottom portion of the employee tablet **602** such that only a portion of the employee tablet screen is shown on the interactive display **606.** In contrast, the guest may set up the guest tablet **604** to mirror the full screen of the guest tablet **604** onto the interactive display **606.**

### School Setting for Application of the Multi-Network Mirroring System

Similar to the corporate setting, the multi-network mirroring system **100** may be used in a school setting such as in a classroom. For example, where the school has set up a wired teacher network for teachers and a wireless student network for students, the school may desire to keep teachers on the teacher network and students on the student network. Because the students and teachers are on different networks, ordinarily they would be unable to connect to a mirroring device that may only be connected to a single network. However, because the multi-network communication box includes a first network communication device such as Ethernet and a second network communication device such as Wi-Fi, both the students and the teachers may mirror content onto an interactive display through the multi-network communication box.

In other embodiments where the multi-network mirroring system **100** comprises a multi-network communication box **608** that contains a wireless access point, the teacher may connect to the device using the teacher's network while the students connect directly to the multi-network communication box **608** through an Ad-hoc network created by the wireless access point. In this way, while the students are connected to the device to interact with the teacher in a collaborative environment, access to the internet would not be provided thus eliminating distractions during the class.

### Conclusion

Many modifications and other embodiments of the invention will come to mind to one skilled in the art to which this invention pertains, having the benefit of the teaching presented in the foregoing descriptions and the associated drawings. Therefore, it is to be understood that the invention is not to be limited to the specific embodiments disclosed and that modifications and other embodiments are intended to be included within the scope of the appended claims. Although specific terms are employed herein, they are used in a generic and descriptive sense only and not for the purposes of limitation.

## Claims

1. A system for displaying information from multiple remote computing devices on a display, wherein the system comprises:
a. one or more processors;
b. a first network communication device that is configured to connect to a first local area network;
c. a second network communication device that is configured to connect to a second local area network, wherein the first network communication device and the second network communication device are simultaneously active; and
d. a first output configured to couple to an interactive display,
wherein the system is configured for:
i. connecting to both the first local area network via the first network
communication device and the second local area network via the second network communication device such that the system is simultaneously connected to both the first local area network and the second local area network, without providing a connection between the first local area network and the second local area network;
ii. receiving (405), via the first network communication device, a first set of information from a first remote computing device that is operatively connected to the first local area network;
iii. receiving (410), via the second network communication device, a second set of information from a second remote computing device that is operatively connected to the second local area network;
iv. mirroring (415) at least a portion of a first display for the first remote computing device based at least partially on the first set of information on the interactive display; and
v. mirroring (415) at least a portion of a second display for the second remote computing device based at least partially on the second set of information on the interactive display.

2. The system of Claim 1, wherein mirroring at least a portion of the first display and the second display occurs substantially simultaneously.

3. The system of Claim 2, wherein mirroring at least a portion of the first display and the second display on the interactive display substantially simultaneously further comprises mirroring the at least a portion of the first display on a first portion of the interactive display and mirroring the at least a portion of the second display on a second portion of the interactive display.

4. The system of Claim 1, wherein the system is further configured for:
a. forming a transparent annotation layer that is positioned over at least one of the mirrored at least a portion of the first display and the mirrored at least a portion of the second display;
b. receiving signals via the one or more processors from the interactive display that are generated when a user touches the interactive display;
c. generating annotations on the transparent annotation layer at least partially in response to receiving the signals; and
d. displaying the annotations as an overlay on the transparent annotation layer.

5. The system of Claim 1, wherein
a. the first local area network is selected from a group consisting of:
i. a teacher network; and
ii. a corporate network; and
b. the second local area network is selected from a group consisting of:
i. a student network; and
ii. a guest network.

6. The system of claim 1, wherein the system is further configured to capture an image of one of the mirrored at least a portion of the first display or the mirrored at least a portion of the second display.

7. A method for mirroring information from a plurality of computing devices on a display using a plurality of local area networks, wherein the method comprises:
a. operatively connecting, via a first communication device, one or more processors with a first local area network;
b. operatively connecting, via a second communication device, the one or more processors with a second local area network, such that the one or more processors are simultaneously connected to both the first local area network and the second local area network, without providing a connection between the first local area network and the second local area network;
c. receiving (405), via the first local area network, a first set of information from a first remote computing device having a first display;
d. receiving (410), via the second local area network, a second set of information from a second remote computing device having a second display;
e. mirroring (415), via the one or more processors, at least a portion of the first display for the first remote computing device on the display at least partially based on the first set of information; and
f. mirroring (420), via the one or more processors, at least a portion of the second display for the second remote computing device on the display at least partially based on the second set of information.

8. The method of Claim 7, wherein
e. the mirrored at least a portion of the first display changes substantially simultaneously on the display as the at least a portion of the first display changes on the first remote computing device; and
f. the mirrored at least a portion of the second display changes substantially simultaneously on the display as the at least a portion of the second display changes on the second remote computing device.

9. The method of Claim 7, wherein the display is a touch enabled display.

10. The method of Claim 9, wherein the touch enabled display is an interactive whiteboard that is operatively coupled to the one or more processors.

11. The method of Claim 7, wherein the first local area network is a corporate network and the second local area network is a guest network.

12. The method of Claim 7, wherein the method further comprises:
operatively connecting, via a third communication device, the one or more processors with a third local area network;
a. receiving, via the third local area network, a third set of information from a third remote computing device having a third display; and
b. mirroring, via the one or more processors, at least a portion of the third display for the third remote computing device on the display at least partially based on the third set of information.

13. A system for displaying information from multiple remote computing devices on a display, wherein the system comprises:
a. one or more processors;
b. a first network communication device that is configured to connect to a first local area network;
c. a second network communication device that is configured to operate as a wireless access point that can wirelessly connect to one or more remote computing devices that are local to the second network communication device; and
d. a first output configured to couple to a display,
wherein the system is configured for:
i. connecting to both the first location area network via the first network communication device and the second local area network via the second network communication device such that the system is simultaneously connected to both the first local area network and the second local area network, without providing a connection between the first local area network and the second local area network;
ii. receiving (405), via the first network communication device, a first set of information from a first remote computing device that is operatively connected to the first local area network;
iii. receiving (410), via the second network communication device, a second set of information from a second remote computing device;
iv. mirroring (415) on the display at least a portion of a first display for the first remote computing device based at least partially on the first set of information; and
v. mirroring (420) on the display at least a portion of a second display for the second remote computing device based at least partially on the second set of information.

14. The system of Claim 13, wherein the system further comprises:
a. a third network communication device that is configured to connect to a second local area network;
wherein the system is configured for:
i. receiving, via the third network communication device, a third set of information from a third remote computing device that is operatively connected to the second local area network; and
ii. mirroring on the display at least a portion of a third display for the third remote computing device based at least partially on the third set of information.

15. The system of Claim 13, wherein the first local area network and the wireless access point comprise different local area networks.

## Patentansprüche

1. System zum Anzeigen von Informationen von mehreren entfernten Computergeräten auf einer Anzeige, wobei das System aufweist:
a. ein oder mehr Prozessoren;
b. ein erstes Netzwerkkommunikationsgerät, das konfiguriert ist, um sich mit einem ersten lokalen Netzwerk zu verbinden;
c. ein zweites Netzwerkkommunikationsgerät, das konfiguriert ist, um sich mit einem zweiten lokalen Netzwerk zu verbinden, wobei das erste Netzwerckommunikationsgerät und das zweite Netzwerkkommunikationsgerät gleichzeitig aktiv sind; und
d. einen ersten Ausgang, der konfiguriert ist, um an eine interaktive Anzeige zu koppeln,
wobei das System konfiguriert ist zum:
i. Verbinden sowohl mit dem ersten lokalen Netzwerk über das erste Netzwerkkommunikationsgerät und mit dem zweiten lokalen Netzwerk über das zweite Netzwerkkommunikationsgerät derart, dass das System gleichzeitig sowohl mit dem ersten lokalen Netzwerk als auch mit dem zweiten lokalen Netzwerk verbunden ist, ohne eine Verbindung zwischen dem ersten lokalen Netzwerk und dem zweiten lokalen Netzwerk vorzusehen;
ii. Empfangen (405) eines ersten Satzes von Informationen über das erste Netzwerkkommunikationsgerät von einem ersten entfernten Computergerät, das operativ mit dem ersten lokalen Netzwerk verbunden ist;
iii. Empfangen (410) eines zweiten Satzes von Informationen über das zweite Netzwerkkommunikationsgerät von einem zweiten entfernten Computergerät, das operativ mit dem zweiten lokalen Netzwerk verbunden ist;
iv. Spiegeln (415) wenigstens eines Teils einer ersten Anzeige für das erste entfernte Computergerät basierend zumindest teilweise auf dem ersten Satz von Informationen auf der interaktiven Anzeige; und
v. Spiegeln (415) wenigstens eines Teils einer zweiten Anzeige für das zweite entfernte Computergerät basierend zumindest teilweise auf dem zweiten Satz von Informationen auf der interaktiven Anzeige.

2. System nach Anspruch 1, wobei das Spiegeln wenigstens eines Teils der ersten Anzeige und der zweiten Anzeige im Wesentlichen gleichzeitig erfolgt.

3. System nach Anspruch 2, wobei das im Wesentlichen gleichzeitige Spiegeln wenigstens eines Teils der ersten Anzeige und der zweiten Anzeige auf der interaktiven Anzeige ferner ein Spiegeln des wenigstens einen Teils der ersten Anzeige auf einem ersten Teil der interaktiven Anzeige und ein Spiegeln des wenigstens einen Teils der zweiten Anzeige auf einem zweiten Teil der interaktiven Anzeige aufweist.

4. System nach Anspruch 1, wobei das System ferner konfiguriert ist zum:
a. Bilden einer transparenten Anmerkungsschicht, die über wenigstens einem des gespiegelten wenigstens einen Teils der ersten Anzeige und des gespiegelten wenigstens einen Teils der zweiten Anzeige positioniert wird;
b. Empfangen von Signalen über die ein oder mehr Prozessoren von der interaktiven Anzeige, die erzeugt werden, wenn ein Benutzer die interaktive Anzeige berührt;
c. Erzeugen von Anmerkungen auf der transparenten Anmerkungsschicht wenigstens teilweise als Reaktion auf das Empfangen der Signale; und
d. Anzeigen der Anmerkungen als ein Overlay auf der transparenten Anmerkungsschicht.

5. System nach Anspruch 1, wobei
a. das erstes lokales Netzwerk ausgewählt ist aus einer Gruppe bestehend aus:
i. einem Lehrernetzwerk; und
ii. einem Unternehmensnetzwerk; und
b. das zweite lokale Netzwerk ausgewählt ist aus einer Gruppe bestehend aus:
i. einem Schülernetzwerk; und
ii. einem Gastnetzwerk.

6. System nach Anspruch 1, wobei das System ferner konfiguriert ist, um ein Bild von einem des gespiegelten wenigstens einen Teils der ersten Anzeige oder des gespiegelten wenigstens einen Teils der zweiten Anzeige zu erfassen.

7. Verfahren zum Spiegeln von Informationen von mehreren Computergeräten auf einer Anzeige unter Verwendung von mehreren lokalen Netzwerken, wobei das Verfahren aufweist:
a. operatives Verbinden von ein oder mehr Prozessoren über ein erstes Kommunikationsgerät mit einem ersten lokalen Netzwerk;
b. operatives Verbinden der ein oder mehr Prozessoren über ein zweites Kommunikationsgerät mit einem zweiten lokalen Netzwerk derart, dass die ein oder mehr Prozessoren gleichzeitig sowohl mit dem ersten lokalen Netzwerk als auch mit dem zweiten lokalen Netzwerk verbunden sind, ohne eine Verbindung zwischen dem ersten lokalen Netzwerk und dem zweiten lokalen Netzwerk vorzusehen;
c. Empfangen (405) eines ersten Satzes von Informationen über das erste lokale Netzwerk von einem ersten entfernten Computergerät mit einer ersten Anzeige;
d. Empfangen (410) eines zweiten Satzes von Informationen über das zweite lokale Netzwerk von einem zweiten entfernten Computergerät mit einer zweiten Anzeige;
e. Spiegeln (415) wenigstens eines Teils der ersten Anzeige für das erste entfernte Computergerät auf der Anzeige über die ein oder mehr Prozessoren zumindest teilweise basierend auf dem ersten Satz von Informationen; und
f. Spiegeln (420) wenigstens eines Teils der zweiten Anzeige für das zweite entfernte Computergerät auf der Anzeige über die ein oder mehr Prozessoren zumindest teilweise basierend auf dem zweiten Satz von Informationen.

8. Verfahren nach Anspruch 7, wobei
e. der gespiegelte wenigstens eine Teil der ersten Anzeige sich im Wesentlichen gleichzeitig auf der Anzeige ändert, wenn sich der wenigstens eine Teil der ersten Anzeige auf dem ersten entfernten Computergerät ändert; und
f. der gespiegelte wenigstens eine Teil der zweiten Anzeige sich im Wesentlichen gleichzeitig auf der Anzeige ändert, wenn sich der wenigstens eine Teil der zweiten Anzeige auf dem zweiten entfernten Computergerät ändert.

9. Verfahren nach Anspruch 7, wobei die Anzeige eine berührungsaktivierte Anzeige ist.

10. Verfahren nach Anspruch 9, wobei die berührungsaktivierte Anzeige ein interaktives Whiteboard ist, das operativ mit den ein oder mehr Prozessoren gekoppelt ist.

11. Verfahren nach Anspruch 7, wobei das erste lokale Netzwerk ein Unternehmensnetzwerk ist und das zweite lokale Netzwerk ein Gastnetzwerk ist.

12. Verfahren nach Anspruch 7, wobei das Verfahren ferner aufweist:
operativ Verbinden der ein oder mehr Prozessoren über ein drittes Kommunikationsgerät mit einem dritten lokalen Netzwerk;
a. Empfangen eines dritten Satzes von Informationen über das dritte lokale Netzwerk von einem dritten entfernten Computergerät mit einer dritten Anzeige; und
b. Spiegeln wenigstens eines Teils der dritten Anzeige für das dritte entfernte Computergerät auf der Anzeige über die ein oder mehr Prozessoren zumindest teilweise basierend auf dem dritten Satz von Informationen.

13. System zum Anzeigen von Informationen von mehreren entfernten Computergeräten auf einer Anzeige, wobei das System aufweist:
a. ein oder mehr Prozessoren;
b. ein erstes Netzwerkkommunikationsgerät, das konfiguriert ist, um sich mit einem ersten lokalen Netzwerk zu verbinden;
c. ein zweites Netzwerkkommunikationsgerät, das konfiguriert ist, um als ein drahtloser Zugangspunkt zu arbeiten, der drahtlos mit ein oder mehr entfernten Computergeräten verbunden werden kann, die lokal zum zweiten Netzwerkkommunikationsgerät sind; und
d. einen ersten Ausgang, der konfiguriert ist, um mit einer Anzeige gekoppelt zu werden,
wobei das System konfiguriert ist zum:
i. Verbinden sowohl mit dem ersten lokalen Netzwerk über das erste Netzwerkkommunikationsgerät als auch mit dem zweiten lokalen Netzwerk über das zweite Netzwerkkommunikationsgerät derart, dass das System gleichzeitig sowohl mit dem ersten lokalen Netzwerk als auch mit dem zweiten lokalen Netzwerk verbunden ist, ohne eine Verbindung zwischen dem ersten lokalen Netzwerk und dem zweiten lokalen Netzwerk vorzusehen;
ii. Empfangen (405) eines ersten Satzes von Informationen über das erste Netzwerkkommunikationsgerät von einem ersten entfernten Computergerät, das operativ mit dem ersten lokalen Netzwerk verbunden ist;
iii. Empfangen (410) eines zweiten Satzes von Informationen über das zweite Netzwerkkommunikationsgerät von einem zweiten entfernten Computergerät;
iv. Spiegeln (415) wenigstens eines Teils einer ersten Anzeige für das erste entfernte Computergerät auf der Anzeige basierend zumindest teilweise auf dem ersten Satz von Informationen; und
v. Spiegeln (420) wenigstens eines Teils einer zweiten Anzeige für das zweite entfernte Computergerät auf der Anzeige basierend zumindest teilweise auf dem zweiten Satz von Informationen.

14. System nach Anspruch 13, wobei das System ferner aufweist:
a. ein drittes Netzwerkkommunikationsgerät, das konfiguriert ist, um sich mit einem zweiten lokalen Netzwerk zu verbinden;
wobei das System konfiguriert ist zum:
i. Empfangen eines dritten Satzes von Informationen über das dritte Netzwerkkommunikationsgerät von einem dritten entfernten Computergerät, das operativ mit dem zweiten lokalen Netzwerk verbunden ist; und
ii. Spiegeln wenigstens eines Teils einer dritten Anzeige für das dritte entfernte Computergerät auf der Anzeige zumindest teilweise basierend auf dem dritten Satz von Informationen.

15. System nach Anspruch 13, wobei das erste lokale Netzwerk und der drahtlose Zugangspunkt unterschiedliche lokale Netzwerke aufweisen.

## Revendications

1. Système destiné à afficher sur un écran des informations provenant de multiples dispositifs informatiques distants, dans lequel le système comprend :
a. un ou plusieurs processeurs ;
b. un premier dispositif de communication de réseau qui est configuré pour se connecter à un premier réseau local ;
c. un deuxième dispositif de communication de réseau qui est configuré pour se connecter à un deuxième réseau local, dans lequel le premier dispositif de communication de réseau et le deuxième dispositif de communication de réseau sont actifs simultanément ; et
d. une première sortie configurée pour se coupler à un écran interactif,
dans lequel le système est configuré pour :
i. se connecter à la fois au premier réseau local via le premier dispositif de communication de réseau et au deuxième réseau local via le deuxième dispositif de communication de réseau de telle sorte que le système est connecté simultanément à la fois au premier réseau local et au deuxième réseau local, sans fournir une connexion entre le premier réseau local et le deuxième réseau local ;
ii. recevoir (405), via le premier dispositif de communication de réseau, un premier ensemble d'informations provenant d'un premier dispositif informatique distant qui est connecté fonctionnellement au premier réseau local ;
iii. recevoir (410), via le deuxième dispositif de communication de réseau, un deuxième ensemble d'informations provenant d'un deuxième dispositif informatique distant qui est connecté fonctionnellement au deuxième réseau local ;
iv. refléter (415) sur l'affichage interactif au moins une portion d'un premier affichage pour le premier dispositif informatique distant, sur la base au moins partiellement du premier ensemble d'informations ; et
v. refléter (415) sur l'affichage interactif au moins une portion d'un deuxième affichage pour le deuxième dispositif informatique distant, sur la base au moins partiellement du deuxième ensemble d'informations.

2. Système selon la revendication 1, dans lequel l'étape de refléter au moins une portion du premier affichage et du deuxième affichage se produit sensiblement simultanément.

3. Système selon la revendication 2, dans lequel l'étape de refléter au moins une portion du premier affichage et du deuxième affichage sensiblement simultanément consiste en outre à refléter ladite au moins une portion du premier affichage sur une première portion de l'affichage interactif et à refléter ladite au moins une portion du deuxième affichage sur une deuxième portion de l'affichage interactif.

4. Système selon la revendication 1, dans lequel le système est en outre configuré pour :
a. former une couche d'annotation transparente qui est positionnée sur au moins l'une de ladite au moins une portion reflétée du premier affichage et de ladite au moins une portion reflétée du deuxième affichage ;
b. recevoir des signaux, via lesdits un ou plusieurs processeurs, provenant de l'affichage interactif et qui sont générés lorsqu'un utilisateur touche l'affichage interactif ;
c. générer des annotations sur la couche d'annotation transparente au moins partiellement en réponse à la réception des signaux ; et
d. afficher les annotations sous la forme d'une superposition sur la couche d'annotation transparente.

5. Système selon la revendication 1, dans lequel :
a. le premier réseau local est sélectionné dans un groupe constitué de :
i. un réseau d'enseignant ; et
ii. un réseau d'entreprise ; et
b. le deuxième réseau local est sélectionné dans un groupe constitué de :
i. un réseau d'étudiant ; et
ii. un réseau d'invité.

6. Système selon la revendication 1, dans lequel le système est en outre configuré pour capturer une image de l'une de ladite au moins une portion reflétée du premier affichage ou de ladite au moins une portion reflétée du deuxième affichage.

7. Procédé destiné à refléter sur un affichage des informations provenant d'une pluralité de dispositifs informatiques en utilisant une pluralité de réseaux locaux, dans lequel le procédé consiste à :
a. connecter fonctionnellement, via un premier dispositif de communication, un ou plusieurs processeurs à un premier réseau local ;
b. connecter fonctionnellement, via un deuxième dispositif de communication, lesdits un ou plusieurs processeurs à un deuxième réseau local, de telle sorte que lesdits un ou plusieurs processeurs sont connectés simultanément à la fois au premier réseau local et au deuxième réseau local, sans fournir une connexion entre le premier réseau local et le deuxième réseau local ;
c. recevoir (405), via le premier réseau local, un premier ensemble d'informations provenant d'un premier dispositif informatique distant ayant un premier affichage ;
d. recevoir (410), via le deuxième réseau local, un deuxième ensemble d'informations provenant d'un deuxième dispositif informatique distant ayant un deuxième affichage ;
e. refléter (415) sur l'affichage, via lesdits un ou plusieurs processeurs, au moins une portion du premier affichage pour le premier dispositif informatique distant, au moins partiellement sur la base du premier ensemble d'informations ; et
f. refléter (420) sur l'affichage, via lesdits un ou plusieurs processeurs, au moins une portion du deuxième affichage pour le deuxième dispositif informatique distant, au moins partiellement sur la base du deuxième ensemble d'informations.

8. Procédé selon la revendication 7, dans lequel :
e. ladite au moins une portion reflétée du premier affichage change sensiblement simultanément sur l'affichage quand ladite au moins une portion du premier affichage change sur le premier dispositif informatique distant ; et
f. ladite au moins une portion reflétée du deuxième affichage change sensiblement simultanément sur l'affichage quand ladite au moins une portion du deuxième affichage change sur le deuxième dispositif informatique distant.

9. Procédé selon la revendication 7, dans lequel l'affichage est un affichage tactile.

10. Procédé selon la revendication 9, dans lequel l'affichage tactile est un tableau blanc interactif qui est couplé fonctionnellement auxdits un ou plusieurs processeurs.

11. Procédé selon la revendication 7, dans lequel le premier réseau local est un réseau d'entreprise et le deuxième réseau local est un réseau d'invité.

12. Procédé selon la revendication 7, dans lequel le procédé consiste en outre à :
connecter fonctionnellement, via un troisième dispositif de communication, lesdits un ou plusieurs processeurs à un troisième réseau local ;
a. recevoir, via le troisième réseau local, un troisième ensemble d'informations provenant d'un troisième dispositif informatique distant ayant un troisième affichage ; et
b. refléter sur l'affichage, via lesdits un ou plusieurs processeurs, au moins une portion du troisième affichage pour le troisième dispositif informatique distant, au moins partiellement sur la base du troisième ensemble d'informations.

13. Système destiné à afficher sur un écran des informations provenant de multiples dispositifs informatiques distants, dans lequel le système comprend :
a. un ou plusieurs processeurs ;
b. un premier dispositif de communication de réseau qui est configuré pour se connecter à un premier réseau local ;
c. un deuxième dispositif de communication de réseau qui est configuré pour fonctionner en tant que point d'accès sans fil qui peut se connecter sans fil à un ou plusieurs dispositifs informatiques distants qui sont locaux au deuxième dispositif de communication de réseau ; et
d. une première sortie configurée pour se coupler à un écran,
dans lequel le système est configuré pour :
i. se connecter à la fois au premier réseau local via le premier dispositif de communication de réseau et au deuxième réseau local via le deuxième dispositif de communication de réseau, de telle sorte que le système est connecté simultanément à la fois au premier réseau local et au deuxième réseau local, sans fournir une connexion entre le premier réseau local et le deuxième réseau local ;
ii. recevoir (405), via le premier dispositif de communication de réseau, un premier ensemble d'informations provenant d'un premier dispositif informatique distant qui est connecté fonctionnellement au premier réseau local ;
iii. recevoir (410), via le deuxième dispositif de communication de réseau, un deuxième ensemble d'informations provenant d'un deuxième dispositif informatique distant ;
iv. refléter (415) sur l'affichage au moins une portion d'un premier affichage pour le premier dispositif informatique distant, sur la base au moins partiellement du premier ensemble d'informations ; et
v. refléter (420) sur l'affichage au moins une portion d'un deuxième affichage pour le deuxième dispositif informatique distant sur la base au moins partiellement du deuxième ensemble d'informations.

14. Système selon la revendication 13, dans lequel le système comprend en outre :
a. un troisième dispositif de communication de réseau qui est configuré pour se connecter à un deuxième réseau local,
dans lequel le système est configuré pour :
i. recevoir, via le troisième dispositif de communication de réseau, un troisième ensemble d'informations provenant d'un troisième dispositif informatique distant qui est connecté fonctionnellement au deuxième réseau local ; et
ii. refléter sur l'affichage au moins une portion d'un troisième affichage pour le troisième dispositif informatique distant, sur la base au moins partiellement du troisième ensemble d'informations.

15. Système selon la revendication 13, dans lequel le premier réseau local et le point d'accès sans fil comprennent des réseaux locaux différents.
